# EUROPÄISCHE PATENTSCHRIFT

(11) **EP 0 620 112 B1**
(45) Veröffentlichungstag und Bekanntmachung des Hinweises auf die Patenterteilung: **18.12.1996**
(21) Anmeldenummer: 94105268.0
(22) Anmeldetag: 05.04.1994
(51) Int. Cl.: B32B 27/32

(54) **Reflexionsreduzierte, verklebbare gereckte Folie als Fensterfolie für Briefumschläge**
Low gloss bondable stretched film for envelope windows
Feuille reliable étirée de faible brilliance pour fenêtre d'enveloppe

(30) Priorität: 16.04.1993 DE 4312388
(43) Veröffentlichungstag der Anmeldung: 19.10.1994
(73) Patentinhaber: WOLFF WALSRODE AKTIENGESELLSCHAFT, D-29699 Walsrode (DE)
(72) Erfinder: Reiners, Ulrich, Dr., D-29643 Neuenkirchen (DE); Krallmann, Anton, Dipl.-Ing., D-29683 Fallingbostel (DE); Albinus, Eberhard, Dipl.-Ing., D-29699 Bomlitz (DE); Böhner, Jürgen, Dipl.-Ing., D-29699 Bomlitz (DE)
(74) Vertreter: Braun, Rolf, Dr.

(56) Entgegenhaltungen:
- EP-A- 0 184 294
- EP-A- 0 436 918
- EP-A- 0 564 846
- DE-A- 4 109 368
- GB-A- 1 168 539
- GB-A- 2 166 113
- US-A- 4 442 158

## Beschreibung

Die Erfindung betrifft die Verwendung einer gereckten mehrschichtigen mindestens einseitig reflexionsreduzierten, transparenten und auf schnellaufenden Kuvertherstellungsmaschinen verklebbaren Folie, die überwiegend aus Polypropylen besteht als Fensterfolie für Briefumschläge.

Bislang werden als Fensterfolie für Briefumschläge vorwiegend Polystyrolfolie oder auch PVC-Folie verwendet. Aus ökologischen Gründen sollen hier andere Rohstoffe wie z.B. Polypropylen eingesetzt werden. Gelegentlich werden auch biaxial orientierte Folien (BOPP-Folien) verwendet, wie sie z.B. bekannt sind aus EP 0 102209. Die literaturbekannten BOPP-Folien sind normalerweise auf schnellaufenden Kuvertherstellungsmaschinen schlecht verklebbar.

Sofern diese Folien aufgrund einer durch Lackierung aufgebrachten Schicht verklebbar sind, EP 0 102 209 weisen sie den Nachteil auf, daß sie glänzend und lichtreflektierend sind, weshalb in automatischen Lesegeräten die Anschriftfelder nur fehlerhaft lesbar sind. Matte-Folien wie sie z.B. in EP 0 122 495 oder JP 098271/81 beschrieben sind, haben den Nachteil, daß sie eine schlechte Transparenz aufweisen.

GB-A-1168539 offenbart, daß Polypropylen-Folien als Umschläge verwendet werden.

Es stellte sich also die Aufgabe, eine transparente Folie aus gereckten Polypropylen bereitzustellen, die eine reflexionsreduzierte Oberfläche aufweist, transparent und verklebbar ist.

Erfindungsgemäß gelang dieses durch eine Polypropylenfolie bestehend aus mindestens zwei Schichten, die dadurch gekennzeichnet sind, daß die eine äußere Schicht reflexionsreduziert ist, eine Plasmavorbehandlung im Niederdruckverfahren aufweist und eine geringe Trübung besitzt.

Die reflexionsreduzierte Schicht besteht aus:
5-60 Gew.-%, eines lineraren Ethylens niedriger Dichte, das kautschuk-und mit Maleinsäureanhydrit modifiziert ist,
5-15 Gew.-% eines Propylen/Ethylen/Butylen aufgebauten Co- und Terpolymer mit Propylen als Hauptkomponente und
25-90 Gew.-% eines oder mehreren Polypropylen-Polyethylen-Blockcopolymeren.

Die Kernschicht dieser Folie besteht überwiegend aus Polypropylen. Weiterhin kann eine zusätzliche Außenschicht aus Polypropylen und den handelsüblichen Antiblockmitteln wie Siliciumdioxid, Natrium-Aluminium-Silikat hinzugefügt werden. Die erfindungsgemäße Folie kann bekannte Gleitmittel, wie Erucasäureamid, Ölsäureamid oder Polydimethylsiloxan und Antistatika wie z.B. ethoxylierte Fettsäureamide enthalten.

Als Ausgangsmaterialien für die reflexionsreduzierte Schicht dienen:
1. Polypropylen-Copolymere, die aus Propylen und α-Olefinen, vorzugsweise Ethylen, vorzugsweise hergestellt nach einem Verfahren der Blockpolymerisation oder heterophasische Copolymerisate des Ethylens und des Propylens oder Kautschuk-modifiziertes Polypropylen.
2. Linerare Copolymere des Ethylens niedriger Dichte, die kautschuk- und mit Maleinsäureanhydrit modifiziert sind.
3. Statistische Propylen/Ethylen Copolymere mit 2 bis 6 Gew.-% Ethylen oder statistische Terpolymere aus Propylen, Ethylen und Butylen mit einem Comonomergehalt von <15 Gew.-% und mit einem Butylengehalt von <7 Gew.-%.

Als Ausgangsmaterialien für die Kernschicht dienen:
Ein isotaktisches Polypropylen mit einem n-heptanlöslichen Anteil von 15 % oder weniger, mit einer Dichte von 0,9 - 0,91 g/cm³ und einem Schmelzflußindex von 0,5 g/10 min bis 8 g/10 min bei 230°C und 21,2 N Belastung (bestimmt nach DIN 53735), besonders bevorzugt wird ein Polypropylen mit einem Schmelzflußindex von 1 bis 5 g/10 min
   und/oder
ein statistisches Propylen/Ethylen Copolymeres mit 2 bis 6 Gew.-% Ethylen, mit einer Dichte von vorzugsweise 0,895 bis 0,96 g/cm³, einem Schmelzflußindex von 1 bis 7 g/10 min bei 230°C und 21,2 N Belastung und einem Kristallitschmelzpunkt je nach Typ im Bereich von 125 bis 148°C (unter Polarisationsmikroskop).

Als Ausgangsschicht für die zweite Außenschicht dienen:

Isotaktisches Polypropylen und/oder statistische Copolymere, die auch als Ausgangsmaterialien für die Kernschicht dienen, die hier in der Außenschicht mit Antiblockmitteln (z. anorganisches Antiblockmittel Siliciumdioxid Syloblock 44® von Firma Grace) ausgerüstet sind.

Die erfindungsgemäß eingesetzte Folie wird nach an sich bekannten Verfahren hergestellt, z.B. durch Coextrusion. Dieser coextrudierte Film wird nach dem Verlassen der Breitschlitzdüse derart abgekühlt, daß die reflexionsreduzierte Schicht eine möglichst langsame Abkühlung erfährt. Anschließend wird der Film erneut auf 120 bis 130°C aufgeheizt und erfährt eine Längsreckung im Verhältnis von 3:1 bis 7:1 - vorzugsweise von 4:1 bis 5:1. Nach der Längsreckung erfolgt bei Temperaturen zwischen 150 und 180°C im Recktunnel eine Querreckung im Verhältnis 7:1 bis 12:1 - vorzugsweise von 8:1 bis 9:1. Vor dem Auslauf aus dem Recktunnel wird der Film bei Temperaturen von 150 bis 160°C thermofixiert. Nach dem Aufwickeln wird die Folie einer Plasmabehandlung unterworfen.

Eine Alternative zu dem oben geschilderten Verfahren zur Herstellung einer 3-schichtigen Folie ist eine 2 Schicht-Coextrusion der Kernschicht und der zweiten Außenschicht, die zuerst, wie oben geschildert, gemeinsam längsverstreckt werden. Zwischen Auslauf des Längsreckteils und dem Einlauf in dem Querreckteil erfolgt nun, wie in EP 0 424 761 A2 geschildert, eine Laminierung oder Extrusion mit der reflexionsreduzierten Schicht. Nach dem Aufbringen dieser Schicht erfolgt eine gemeinsame Querverstreckung des Folienverbundes im Verhältnis von 7 bis 12 - vorzugsweise im Verhältnis von 8 bis 9, der wie üblich eine Thermofixierung und anschließend nach dem Aufwickeln eine Plasmabehandlung folgt.

Die reflexionsreduzierte Schicht ist dadurch gekennzeichnet, daß sie vorzugsweise eine Dicke von 1-3 µm hat und aus
5-60 Gew.-% eines auf Ethylen basierendes Copolymeres, modifiziert mit polaren Gruppen.,
5-15 Gew.-% eines Randomcopolymerisats aus Propylen und Ethylen mit einem Ethylenanteil von 2 bis 6 Gew.%,
25 bis 90 Gew.-% Polypropylencopoymerisaten, hergestellt nach einem Verfahren der Blockcopolymerisation.

Die Kernschicht weist vorzugsweise eine Dicke von 15 bis 50 µm auf und besteht aus
95 bis 100 Gew.-% eines isotaktischen Polypropylens mit einem Schmelzindex von 0,5 bis 8 g/10 min (230°C/21,2N),
5 bis 0 Gew.% Antistatikum und/oder Gleitmittel.

Die zweite Außenschicht hat vorzugsweise eine Dicke von 0,5 bis 1,5 µm und besteht aus
97 bis 100 Gew.-% eines isotaktischen Polpropylens mit einem Schmelzflußindex von 0,5 bis 8 g/10 min (230°C/21,2N) und
3 bis 0 Gew.% Gleitmittel, Antiblockmittel und Antistatikum.

Überraschenderweise zeigte sich, daß die erfindungsgemäß eingesetzte Folie durch eine Plasmavorbehandlung mit Sauerstoff im Niederdruckverfahren eine gute Verklebbarkeit aufweist. Eine solche Plasmavorbehandlung wird z.B. in EP 0 436918 "Verfahren zur Behandlung von Polyolefinen beschrieben". Die Plasmavorbehandlung wird bei einem Druck von 0,01 bis 0.1 mbar mit Sauerstoff als Prozeßgas durchgeführt. Die Folienbahn wird über eine gekühlten Walze geführt. Dabei durchläuft sie ein mit Gleichstrom betriebenes Plasmafeld. Der Abstand zwischen Kathode und Folienbahn beträgt im Mittel 85 mm. Die Geschwindigkeit der Folienbahn wird so eingestellt, daß die Folie eine optimale Vorbehandlung erfährt, so daß sie einerseits sehr gut verklebbar ist und andererseits keine thermische Schädigung durch die Plasmavorbehandlung erfahren hat. Dabei war besonders überraschend, daß die Verklebbarkeit der erfindungsgemäßen Folie auf schnelllaufenden Kuvertherstellmaschinen hervorragend und daß die Folie deutlich reflexionsreduziert und auch gleichzeitig in hohem Maße transparent ist

In den nachfolgenden Beispielen werden folgende Prüfmethoden und Verfahren zur Bestimmung der Werte und Eigenschaften verwendet.

Der Glanz wird nach DIN 67530 bestimmt. Er ist hier der unter einem Winkel von 60° reflektierte Lichtanteil gemessen in Glanzeinheiten GE.

Die Trübung wird nach ASTM D 1003 bestimmt. Sie wird in Prozent (%) angegeben und ist das Verhältnis von diffuser Lichttransmission zu totaler Lichttransmission multipliziert mit 100.

Der Verklebbarkeitstest wird für diese Folie in folgenderweise getestet:

Auf die Oberfläche der reflexionsreduzierten Schicht wird ein Kleber (Dispersionskleber von Firma Henkel mit der Bezeichnung Adhesin® A 7250) mit einer hierfür vorgesehenen Vorrichtung aufgetragen. Diese Vorrichtung besitzt eine Bohrung von einem Durchmesser von 4 mm, durch die der Kleber auf die Folie gelangt. Die Dicke des Auftrages wird über eine Spaltbreite von 0,1 mm geregelt.

Nach kurzer Wartezeit wird ein Briefblockpapier (bigraph® 70 g/m² Bestell-Nr. 91.3203) auf die Klebenaht gelegt. Die Klebung wird durch Pressen mit zwei Glasplatten bei einem Druck von 10 g/cm² für 30 Sekunden fertiggestellt. Die Verbunde sind anschließend über 24 Stunden und ohne Druck bei Raumtemperatur zu lagern und dann zu trennen. Nach dem Aussehen des Trennungsbildes ist die Verklebbarkeit einzustufen. Die Trennung des Verbundes aus Folie und Papier erfolgt in der Weise, daß die Folie unter einem Winkel von 90° abgezogen wird.

Bei einer guten Verklebung lösen sich beim Trennvorgang Teile des Papiers, so daß die Folie im Bereich des aufgetragenen Klebstoffes mit Papier bedeckt bleibt. Hier ist die Verbundhaftung zwischen Folie und Papier größer als die Eigenfestigkeit des Papiers. Das Trennungsbild einer schlechten Verklebung hat folgendes Aussehen: Die Folie läßt sich vom Klebstoff, welcher am Papier haften bleibt, vollständig abziehen.

### Beispiel 1

Es wurde durch Coextrusion und anschließende Streckorientierung und Hitzefixierung eine dreischichtige, einseitig reflexionsreduzierte Folie mit einer Gesamtdicke von 30 µm hergestellt. Eine der Außenschichten (reflexionsreduzierte Schicht) hat eine Dicke von 2 µm und die andere Außenschicht eine Dicke von 1 µm und die Kernschicht eine Dicke von 27 µm.

Die Kernschicht besteht aus Polypropylen mit einem Zusatz von einem Antistatikum und Gleitmittel. Der Schmelzindex für das eingesetzte Polypropylen betrug 3,0 g/10 min (230°C, 21,2 N).

Die transparente Außenschicht bestand aus dem gleichen Polypropylen, das zusätzlich neben dem Antistatikum und Gleitmittel auch Siliziumdioxid als Antiblockmittel enthielt.

Die reflexionsreduzierte Schicht hat folgende Zusammensetzung:
80 Gew.-% Propylen/Ethylen Blockcopolymerisat mit einem Schmelzflußindex von 3,0 g/10 min und einem Kerbschlagzähigkeitswert von 50 kJ/m² bei einer Temperatur von 0°C (DIN 53 448/1B).
10 Gew.-% eines mit Maleinsäureanhydrid modifiziertes lineares Polyethylens mit einem Schmelzflußindex von 1,7 g/10 min und einem Vicat-Erweichungspunkt von 76°C.
10 Gew.-% Propylen/Ethylen Randomcopolymerisat mit einem Schmelzflußindex von 4,7 g/10 min und einem Schmelzpunkt von 135°C.

Die Folie wurde mit einem Längsreckverhältnis von 5,0 und einem Querreckverhältnis von 9,8 hergestellt. Die Thermofixierung erfolgte bei einer Temperatur von 160°C. Die reflexionsreduzierte Schicht wurde einer Plasmavorbehandlung in einer Sauerstoffatmosphäre im Niederdruckverfahren unterzogen.

### Beispiel 2

Die Dicken und die Rezeptur für die Kernschicht und die transparente Außenschicht sind wie im Beispiel 1 gewählt. Die reflexionsreduzierte Schicht hat auch eine Dicke von 2 µm und besitzt folgende Zusammensetzung:
30 Gew.-% Propylen/Ethylen Blockcopolymerisat mit einem Schmelzflußindex von 3,0 g/10 min und einem Kerbschlagzähigkeitswert von 50 kJ/m² bei einer Temperatur von 0°C (DIN 53 448/1B).
60 Gew.-% eines mit Maleinsäureanhydrid modifiziertes linearen Polyethylens mit einem Schmelzflußindex von 1,7 g/10 min und einem Vicat-Erweichungspunkt von 76°C.
10 Gew.-% Propylen/Ethylen Randomcopolymerisat mit einem Schmelzflußindex von 4,7 g/10 min und mit einem Schmelzpunkt von 135°C.

Die Folie wurde mit den gleichen Verfahrensparametern produziert wie im Beispiel 1 und auch einer Plasmavorbehandlung unterzogen.

### Vergleichsbeispiel 1:

Als Vergleichsbeispiel 1 dient Walothen® C30 SE (Hersteller Wolff Walsrode AG) eine biaxial gereckte beidseitig siegelbare Folie mit einseitiger Coronavorbehandlung. Dabei handelt es sich um eine Polypropylenfolie mit einer Gesamtdicke von 30 µm.

### Vergleichsbeispiel 2

Eine Mattfolie unter der Bezeichnung Alfan® SO 202 mit einer Stärke von 20 µm, die von der Firma Honshu aus Japan vertrieben wird. Die Folie wird als Kaschierfolie zur Veredlung von graphischen Produkten verwendet.

### Vergleichsbeispiel 3

Beidseitig acryllackierte BOPP-Folie, die von der Firma Molbiloil Corp. unter der Bezeichnung Bicor® MB 600 in einer Dicke von 25 µm vertrieben wird.

In der folgenden Tabelle sind die Ergebnisse der Beispiele und der Vergleichsbeispiele aufgeführt.

**Tabelle**

| Beispiel | Glanz 60° | Trübung % | Verklebbarkeit | Maschinengängigkeit |
|---|---|---|---|---|
| 1 | 35 | 20 | ++ | ++ |
| 2 | 33 | 22 | ++ | + |

| Vergleichsbeispiel | | | | |
|---|---|---|---|---|
| 1 | 80 | 2 | - | - |
| 2 | 8 | 80 | 0 | + |
| 3 | 100 | 1,5 | + | + |

Bedeutung der Beurteilungskriterien:
- ++: sehr gut
- +: gut
- 0: mäßig
- -: nicht ausreichend

Nur die Beispiele 1 und 2 lassen sich sehr gut verkleben und entsprechen mit ihren optischen Werten den gewünschten Anforderungen.

## Patentansprüche

1. Verwendung einer Gereckten mindestens zweischichtigen Folie, die überwiegend aus Polypropylen besteht und dadurch gekennzeichnet ist, daß sie mindestens eine reflexionsreduzierte Oberfläche aufweist, die einer Plasmavorbehandlung im Niederdruckverfahren mit Sauerstoff als Prozeßgas unterzogen wurde und sehr gut verklebbar ist, deren Oberflächenglanz weniger als 60 Glanzeinheiten, gemessen nach DIN 67 530, beträgt, und daß die Trübung, gemessen nach ASTM D 1003, der Folie kleiner 40 % ist als Fensterfolie für Briefumschläge.

2. Verwendung nach Anspruch 1, dadurch gekennzeichnet, daß die reflexionsreduzierte Schicht folgende Zusammensetzung aufweist:
5 bis 60 Gew.-% eines auf Ethylen basierenden Copolymers, modifiziert mit polaren Gruppen,
5 bis 15 Gew.-% eines Randomcopolymerisats aus Propylen und Ethylen mit einem Ethylenanteil von 2 bis 6 Gew.-%,
und
25 bis 90 Gew.-% Polypropylencopolymerisate, hergestellt durch Blockcopolymerisation.

3. Verwendung nach einem der vorgenannten Ansprüche, dadurch gekennzeichnet, daß die Folie eine Dicke von mindestens 10 µm aufweist.

4. Verwendung nach einem der vorgenannten Ansprüche, dadurch gekennzeichnet, daß die reflexionsreduzierte Schicht eine Dicke von 1 bis 4 µm aufweist.

5. Verwendung nach einem der vorgenannten Ansprüche, dadurch gekennzeichnet, daß die Folie eine zweite Außenschicht aufweist, die Antiblockmittel enthält.

6. Verwendung nach einem der vorgenannten Ansprüche, dadurch gekennzeichnet, daß die Folie Gleitmittel, Antistatika und Antiblockmittel enthält.

7. Verwendung nach einem der vorgenannten Ansprüche, dadurch gekennzeichnet, daß die Kernschicht überwiegend aus Polypropylen besteht.

8. Verwendung nach einem der vorgenannten Ansprüche, dadurch gekennzeichnet, daß die Folie mehr als drei Schichten aufweist.

## Claims

1. Use of a stretched film having at least two layers and predominantly consisting of polypropylene and characterised in that it has at least one reflection-reduced surface, which has been subjected to low pressure plasma pretreatment with oxygen as process gas and is very readily bondable, the surface gloss of which is less than 60 gloss units, measured to DIN 67 530, and that haze of the film, measured to ASTM D 1003, is less than 40% as a window film for envelopes.

2. Use according to claim 1, characterised in that the reflection-reduced layer is of the following composition:
5 to 60 wt.% of an ethylene-based copolymer modified with polar groups,
5 to 15 wt.% of a random copolymer prepared from propylene and ethylene with an ethylene content of 2 to 6 wt.%,
and
25 to 90 wt.% of polypropylene copolymers produced by block copolymerisation.

3. Use according to one of the preceding claims, characterised in that the film has a thickness of at least 10 µm.

4. Use according to one of the preceding claims, characterised in that the reflection-reduced layer has a thickness of 1 to 4 µm.

5. Use according to one of the preceding claims, characterised in that the film has a second outer layer containing antiblocking agents.

6. Use according to one of the preceding claims, characterised in that the film contains lubricants, antistatic agents and antiblocking agents.

7. Use according to one of the preceding claims, characterised in that the core layer predominantly consists of polypropylene.

8. Use according to one of the preceding claims, characterised in that the film has more than three layers.

## Revendications

1. Utilisation d'une feuille étirée, comprenant au moins deux couches, qui est constituée principalement de polypropylène et qui est caractérisée par le fait qu'elle présente au moins une surface à réflexion réduite qui a été soumise à un prétraitement au plasma dans un procédé basse pression avec de l'oxygène comme gaz de traitement et qui manifeste une très bonne aptitude au collage, dont le brillant superficiel s'élève à une valeur inférieure à 60 unités de brillance, mesuré conformément à la norme DIN 67 530, et en ce que la turbidité, mesurée conformément à la norme ASTM D1003, de la feuille est inférieure à 40%, comme feuille de fenêtre pour des enveloppes.

2. Utilisation selon la revendication 1, caractérisée en ce que la couche à réflexion réduite présente la composition ci-après:
de 5 à 60% en poids d'un copolymère à base d'éthylène, modifié avec des groupes polaires,
de 5 à 15% en poids d'un copolymère statistique de propylène et d'éthylène contenant une fraction d'éthylène de 2 à 6% en poids, et
de 25 à 90% en poids de copolymères de polypropylène préparés par copolymérisation séquencée.

3. Utilisation selon l'une quelconque des revendications précédentes, caractérisée en ce que la feuille présente une épaisseur d'au moins 10 µm.

4. Utilisation selon l'une quelconque des revendications précédentes, caractérisée en ce que la couche à réflexion réduite présente une épaisseur de 1 à 4 µm.

5. Utilisation selon l'une quelconque des revendications précédentes, caractérisée en ce que les feuilles présentent une seconde couche externe qui contient des agents antiblocage.

6. Utilisation selon l'une quelconque des revendications précédentes, caractérisée en ce que la feuille contient des agents de glissement, des agents antistatiques et des agents antiblocage.

7. Utilisation selon l'une quelconque des revendications précédentes, caractérisée en ce que la couche centrale est constituée principalement de polypropylène.

8. Utilisation selon l'une quelconque des revendications précédentes, caractérisée en ce que la feuille présente plus de trois couches.
